# EUROPEAN PATENT SPECIFICATION

(11) **EP 4 501 741 B1**
(45) Date of publication and mention of the grant of the patent: **26.11.2025**
(21) Application number: 23382813.6
(22) Date of filing: 03.08.2023
(51) Int. Cl.: B61B 13/10, B61B 13/12, B66B 9/04, B65G 51/04

(54) **MEANS OF TRANSPORT WITH PNEUMATIC PISTON OPERATION FOR PASSENGERS**
VERKEHRSMITTEL MIT PNEUMATISCHEM KOLBENBETRIEB FÜR PASSAGIERE
MOYEN DE TRANSPORT OPÉRANT EN PISTON PNEUMATIQUE POUR PASSAGERS

(43) Date of publication of application: 05.02.2025
(73) Proprietor: Estruch Serrano, Josep Antoni, 46010 Valencia (ES)
(72) Inventor: Estruch Serrano, Josep Antoni, 46010 Valencia (ES)
(74) Representative: Espiell Gomez, Ignacio

(56) References cited:
- CN-A- 115 042 825
- DE-A1- 1 906 449
- DE-A1- 2 027 186
- GB-A- 1 338 121
- US-A- 4 458 602
- US-A1- 2016 121 908

## Description

### OBJECT OF THE INVENTION

The invention, as stated in the title of the present specification, relates to a means of transport with pneumatic piston operation for passengers that contributes advantages and features to the function intended, which are described in detail further on.

The object of the present invention relates to a means of transporting passengers which, being able to consist of either a vehicle for horizontal displacement, particularly a train made up of a locomotive and a convoy of one or more wagons, or a vehicle for vertical displacement, particularly an elevator made up of at least one cabin, has the innovative particularity of said vehicle being displaced like a piston inside a barrel in the form of a horizontal conduit or vertical tube in which, when generating a vacuum in the front area of the same by means of exhaust fans provided for this purpose, the forward movement of the vehicle is caused by being pushed/suctioned by the difference in atmospheric pressure.

### FIELD OF APPLICATION OF THE INVENTION

The field of application of the present invention falls within the industry sector dedicated to the manufacture of means of transport, specifically for the transport of passengers, specifically covering the field of trains on the one hand and elevators on the other.

### BACKGROUND OF THE INVENTION

The so-called "pneumatic transport system" or "pneumatic tube system" is known in the state of the art. This system uses the creation of a vacuum to suction light objects, usually documents or money, into a sealed plastic cylinder and transports them through a network of tubes to their final destination.

This system has worked well in low-weight systems, for example in banks or financial institutions, supermarkets or other companies, even mail delivery was done. However, to date, all attempts to build vehicles such as pneumatic trains based on this system for the transport of passengers or goods have failed.

Currently, related to this technology, the so-called "Zeleros" train, developed by students at the Polytechnic University of Valencia, or the so-called "Hyperloop" by the tycoon Elon Musk, are known.

Both projects are similar and are based on a barrel-type conduit (instead of a track) where a vacuum has been created and through which the vehicle consisting of a pressurized capsule (with life support) circulates with the passengers or cargo enclosed inside, so that the capsule is sustained by magnetic levitation. Thus, although a vacuum is created to avoid air resistance, the train moves driven by the levitation motor and not by the air pressure differential, which is zero (or almost zero) throughout the barrel.

Thus, it cannot be said that these vehicles are pneumatic trains, since they do not move due to the pressure differential (vacuum) caused in a part of the conduit. The vacuum is only generated to avoid air resistance as the vehicle is displaced inside the conduit.

In addition, both proposals have some drawbacks that are discussed below.

First of all, not many people would want to travel inside a pressurized capsule knowing that there is no air to breathe outside and there is no atmospheric pressure, since, if there is a problem, passengers could die from lack of oxygen, and if there is a crack in the hull, the internal pressure would disappear due to the air leak causing passengers to explode, becoming a bloody paste stuck to the capsule wall.

The second drawback is of an economic nature, because the construction cost of the barrel, the manufacturing cost of the pressurized units with built-in life support, the energy consumption if the technology based on levitation and the complex maintenance, are very expensive are take into account.

The objective of the present invention is, therefore, the development of an authentic vehicle for passengers or goods that truly uses pneumatic operation, that is to say, that takes advantage of the pressure difference technology by creating a vacuum inside a conduit to cause its displacement.

Furthermore, and as a reference to the current state of the art, it should be noted that at least the applicant is unaware of the existence of any other means of transport, or any other invention of similar application, which presents technical, structural and constitutive features that are the same or similar to those presented by that which is claimed herein.

Document GB1338121A discloses a train moved through a tube by sucking air out of the tube ahead of the train. The train may be accelerated by linear induction motors, wherein the train comprises a perimetral fit with the tube which with an adjustable part.

Document CN115042825A discloses a vacuum pipeline transportation system driven by air pressure including a movable transporter with inflatable annular sealing rings.

Document DE1906449A1 discloses a method and devices for pneumatically moved toy figures and toy vehicles for creating self-contained toy systems or for supplementing, for example, model road traffic or model railway systems.

Document US4458602A discloses a pneumatic pipeline transportation system for solid, containerized cargo.

Document DE2027186A1 discloses a pneumatic tube system for transporting goods in special containers.

Document US2016121908A1 discloses a transportation system for people as well as goods that preserves energy by using the zero energy travel principle where energy is recycled instead of being wasted as heat or noise.

### DESCRIPTION OF THE INVENTION

The means of transport with pneumatic piston operation for passengers proposed by the invention is configured as the ideal solution to the aforementioned objective, the characterizing details that make it possible and that distinguish it being conveniently included in the final claims that accompany this description.

The invention is defined by the means of transport with pneumatic piston operation for passengers according to claim 1, the invention is also a method for operating a means of transport as defined by claim 12.

Specifically, what the invention proposes, as previously noted, is a means of transporting passengers that consists either of a vehicle for horizontal displacement, specifically a train made up of a locomotive and a convoy of one or more wagons, or of a vehicle for vertical displacement, specifically an elevator made up of at least one cabin, where said vehicle is displaced like a piston inside a specific barrel, which in the case of the train is in the form of a conduit which is generally oval in section and is arranged horizontally, and in the case of the elevator it is in the form of a vertical tube which is generally circular in section, said displacement being caused by creating a vacuum in the front area of the barrel, by activating exhaust fans provided for this purpose, which causes the forward movement of the vehicle pushed by the difference in atmospheric pressure between said vacuum area and the rear of the vehicle.

For this, and more specifically, the means of transport essentially comprises the following elements:
- A barrel which, in the form of a hollow cylinder, is built and installed at the desired location, with a variable length depending on the section to be traveled, and may even be several kilometers long, and has an internal dimension according to the dimensions of the vehicle that is displaced therein, and it may be cylindrical or oval in section. In any case, said barrel has hermetic walls and has, at one end thereof, a wall or door, for example a diaphragm, which hermetically closes said end, while the opposite end remains open to the outside. In addition, in at least part of the area close to the closed end of the barrel, the existence of one or more air exhaust fans capable of creating a vacuum in the space between said closed end and the head of the vehicle, regardless of the position thereof, is foreseen.
- And a vehicle that in turn comprises:
- a head made up of a rigid body in the form of a piston with a perimeter pneumatic seal that fits with the shape and dimension of the inner wall of the barrel, and
- at least one accommodation for cargo, whether passengers or goods,
the vehicle being installed in the barrel so that the head is located on the side of the closed end while the accommodation or accommodation for charge is on the open side.

With this, when the exhaust fans are activated, a vacuum is formed in the space between the head of the vehicle and the closed end of the barrel, so said head, configured as a piston, will move in the forward movement direction towards the closed end of the barrel pushed by atmospheric pressure, dragging the accommodation or accommodations that make up the rest of the vehicle, which are in direct contact with the atmosphere and, therefore, allow passengers and cargo to be directly in contact with the air and breathe normally, just as if it were a subway tunnel.

In addition, as previously noted, based on said common configuration, the means of transport that is the object of the invention can be for horizontal displacement and consist of a train with several wagons for passenger or goods, or it can be for vertical displacement and consist of an elevator with a cabin to take people or cargo up and down.

Thus, in an embodiment variant, where the means of transport are for horizontal displacement, the barrel is preferably made up of conduit which is oval in section and the vehicle consists of a train the locomotive of which is the head in the form of a piston with a pneumatic seal, which will have an adjustable internal pressure so that it fits with the walls of the oval barrel, and one or more wagons as accommodation for passengers or goods that are coupled to said locomotive.

In this variant, since the vehicle moves in the horizontal plane and can weigh a ton or more, the pneumatic seal of the piston that makes up the locomotive head would support all its weight in the lower part. However, to avoid this problem, the locomotive head comprises, on both sides of the piston body, respective bearing structures, which shall be referred to as vertical tricycles, as they comprise three arms with bearings, which slide along the internal wall of the barrel, one of which is located in the lower part and acts as a support wheel, while the other two simply act as anti-roll elements.

More specifically, each bearing structure or vertical tricycle comprises three arms, a lower vertical arm and two upper V-shaped arms, which are attached at one end, radially and integrally, to an anchor associated in turn with a hooking mechanism that serves to fix the assembly to the front part and back part of the piston, and which, at the opposite end thereof, incorporate a bearing that will make contact with the wall of the barrel.

In this way, once the locomotive reaches the minimum displacement speed, pressure will be removed from the pneumatic seal, so that it does not rub against the inner wall of the barrel, so a little air will circulate through the small space between said seal and said wall, which will act as a "lubricant".

Bearing in mind that the only contact of the locomotive head with the wall of the barrel will be the bearings of the vertical tricycles, that the only bearings that will support the weight of the locomotive head will be the lower ones, that there will be no friction between the pneumatic seal of the locomotive head and the inner wall of the barrel during most of the displacement, only to start or brake the convoy, that the train cannot roll over, that the train cannot derail, that its displacement movement is caused by atmospheric pressure, which is a constant force of 10Tm/m2 that will cause a constant acceleration, the displacement speed of the locomotive is expected to be of the value that is desired, only conditioned by the resistance of the materials and the capacity of the passengers to support high speeds, since acceleration will be constant.

In turn, each of the wagons of the train convoy that make up the accommodation for passengers or goods is made up of a platform with a support wheel consisting of a vertical arm that is integrally attached at an upper end to an anchor associated in turn with a hooking mechanism that serves to fix it to the platform, and that, at its lower end, incorporates a bearing on which the wagon rests and makes contact with the wall of the barrel.

Furthermore, preferably, each platform of each wagon includes a single wheel at the rear part, given that the front part will be hooked to the locomotive or to the platform of the previous wagon. The payload, which can be anything such as a conventional train car/wagon, containers or a directly stowed load, will be incorporated on the platform.

It should be noted that there is a space between the platform and the wall of the barrel so that it does not rub against the inner wall of the barrel, in such a way that the passengers on board, in the case of a passenger train, will see the wall of the barrel like they see the subway tunnel wall. Optionally, in the barrel sections that run along the surface, this can be made totally or partially of a transparent material, for example, in the upper half.

In a preferred embodiment, the barrel through which the train is displaced describes a circuit in the form of a rectangle with round ends, in such a way that it comprises two straight round-trip barrel sections, which run parallel and the curvature will be made only at the ends. Thus there is a single barrel through which two or more train units always run in the same direction, so they will not be able to collide and they will not have to turn to make the return nor will two locomotives be necessary, one at each end.

And in another variant of the invention, where the means of transport are for vertical displacement, the barrel is a cylindrical tube installed vertically in a multi-story building or structure with the upper end closed and open to the outside at the lower end, and the vehicle is an elevator the upper part of which is defined by a head made up of a body in the form of a piston with an adjustable pressure pneumatic seal which, in this case, also incorporates two rigid seals, preferably made of a metallic or ceramic material, but they can be made of any other material that may be considered to make resistant seals, arranged around the perimeter of the piston body on both sides of the pneumatic seal, that is, one above and one below.

In addition, in this case, the variable pressure of said pneumatic seal will serve to facilitate the maneuver and to be able to perform emergency braking if necessary.

An elevator car for passengers or cargo is coupled to the lower face of the piston, as an accommodation for the cargo in the vehicle.

The operation of the elevator is the same as in the previous case, but in the vertical direction. Thus, by creating a vacuum in the upper section of the barrel, above the piston that makes up the head or upper part of the elevator, by means of the exhaust fans installed for that purpose in said area of the barrel, the appropriate pressure can be left in order to position the piston at the necessary height so that the car is aligned with each floor. Logically, the calculation of said pressure must take into account the weight of the piston itself plus the weight of the cabin plus the weight of the passengers (which will be variable). As in the case of the train, the passengers travel in the barrel segment with air and atmospheric pressure because the air column inside the barrel is in direct contact with the outside through the lower part of the barrel, which is open.

If the atmospheric pressure at sea level (1 atm) is approximately 100,000 N/m2, that is, 10,000 kg/m2, an elevator with a piston with a surface area of one square meter could move a weight of up to 10,000 kg by creating a vacuum in the barrel segment located above the piston.

### DESCRIPTION OF THE DRAWINGS

To complete the description provided herein, and for the purpose of helping to make the features of the invention more readily understandable, this description is accompanied by a set of drawings constituting an integral part of the same, which by way of illustration and not limitation represents the following:
Figure 1 shows a side elevational and sectional view of the schematic depiction of a segment of the barrel and the piston of the locomotive head of the train that makes up the vehicle of the pneumatic means of transport object of the invention, in its horizontal displacement variant, where the essential parts thereof can be seen;
Figures 2-A and 2-B show schematic side and front elevational views, respectively, of the arm with a lower bearing that includes the vertical tricycles of the locomotive head of the train that constitutes the means of transport, according to the example of Figure 1, as a support wheel, where the parts and elements comprised therein can be seen;
Figures 3-A, 3-B and 3-C show respective schematic front, side and top plan elevational views of one of the vertical tricycles that includes the locomotive head, where the arrangement of the three arms forming same can be seen;
Figure 4 shows a schematic side elevational view of the locomotive head assembly with the two vertical tricycles incorporated on both sides of the piston;
Figures 5-A and 5-B show schematic side and front elevational views, respectively, of the locomotive head of the train that constitutes the vehicle of the means of transport of the invention, in its horizontal displacement variant;
Figure 6 shows again a schematic front elevational view of the locomotive head, in this case including the vertical tricycles, where only the one located at said front side, and the profile of the barrel through which the vehicle circulates can be seen;
Figures 7-A, 7-B and 7-C show respective schematic side, front and top plan elevational views of an example of the wagon that constitutes the accommodation for cargo in the vehicle of the means of transport of the invention, according to the example of the horizontal displacement variant shown in Figures 1 to 6, where the configuration and arrangement of its main parts, that is, the platform and the support wheel, can be seen;
Figure 8 shows a schematic front elevational view of the assembly of the locomotive head and wagon that makes up the train, according to the example of the preceding figures, as well as the profile of the barrel through which it circulates;
Figure 9 shows a schematic side elevational view of the assembly of the locomotive head and two wagons that make up the train, according to the invention, in its horizontal displacement vehicle variant, in this case including the barrel through which it runs; and
Figure 10 shows a schematic side elevational view of another example of the means of pneumatic transport of the invention, in this case in its vertical displacement variant as an elevator, where the main parts and elements comprised therein and the arrangement thereof can be seen.

### PREFERRED EMBODIMENT OF THE INVENTION

In view of the aforementioned figures and in accordance with the numbering used, two non-limiting exemplary embodiments of the means of transport with pneumatic piston operation for passengers of the invention, which comprises what is described in detail below, can be seen therein.

Thus, as can be seen in said figures, the means of transport (1) of the invention is of the type that essentially comprises a hollow barrel (2) and a vehicle (3) that is displaced therein, with the particularity:
- that said barrel (2), which is cylindrical or oval in section and has hermetic walls, has a first closed end (2a), for example, closed with a diaphragm, and a second open end (2b) that is open to the outside, and incorporates, in at least part of the area close to the closed end (2a), one or more air exhaust fans (4) capable of creating a vacuum in the space (a) between said closed end (2a) and the head (3a) of the vehicle (3);
   - that said vehicle (3) in turn comprises:
   - a head (3a) made up of a rigid body in the form of a piston (5) with a perimeter pneumatic seal (6) that fits with the shape and dimension of the inner wall of the barrel (2); and
   - at least one accommodation (3b) for loading passengers and/or goods; and
- that the vehicle (3) is installed inside the barrel (2) with the head (3a) oriented towards the closed end (2a) and the accommodation or accommodations towards the open end (2b), such that the vehicle (3) moves and is displaced inside the barrel (2) in the direction of the closed end (2a), as indicated by the arrow (f), by activating the exhaust fans (4) and creating a vacuum in the space (a) between the head (3a) of the vehicle (3) and said closed end ( 2a) of the barrel (2), pushed by the existing pressure difference with the atmospheric pressure of the open end (2b).

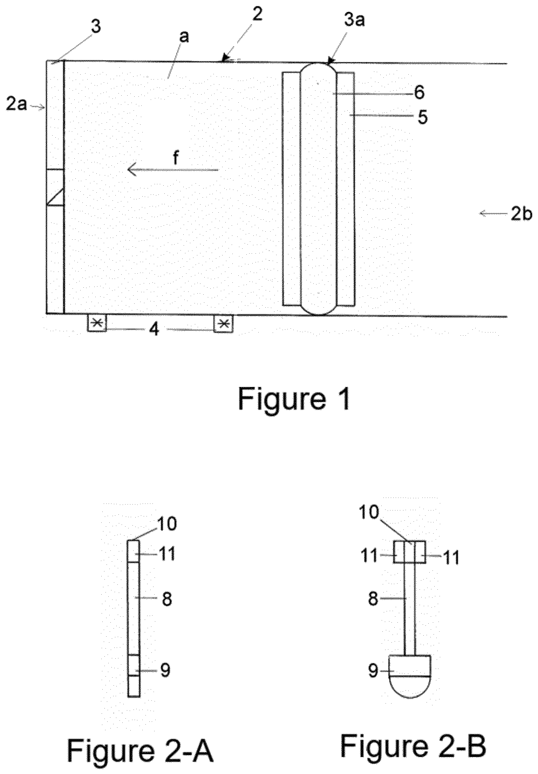

In an embodiment variant, shown in Figures 1 to 9, the barrel (2) is installed horizontally and the vehicle (3) is a train with a locomotive head (3a) and one or more accommodation wagons (3b) for passengers and/or goods.

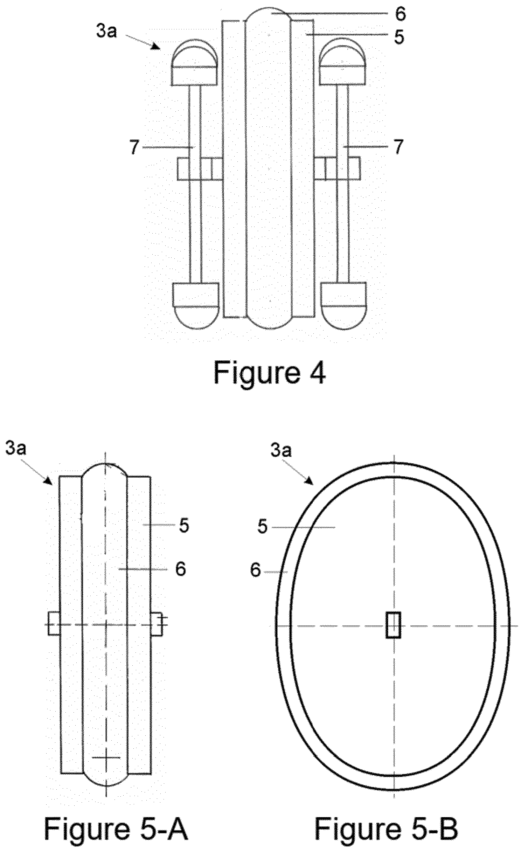

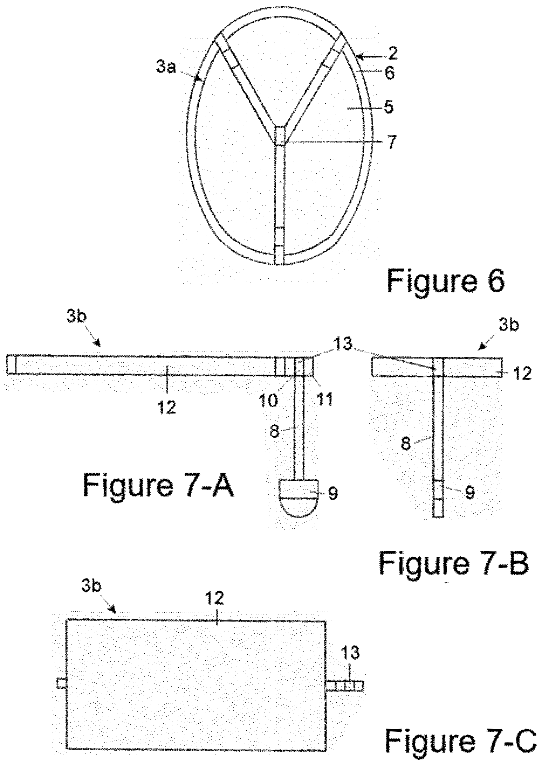

Preferably, in this variant, the barrel (2) is oval in section and the locomotive head (3a) includes, on both sides of the piston body (5), respective bearing structures or vertical tricycles (7), each of which comprises three arms (8) with bearings (9) at their ends that slide along the inner wall of the barrel (2), a lower vertical arm that acts as a support wheel and two V-shaped arms that act as anti-roll elements, as can be seen in Figures 4 and 6.

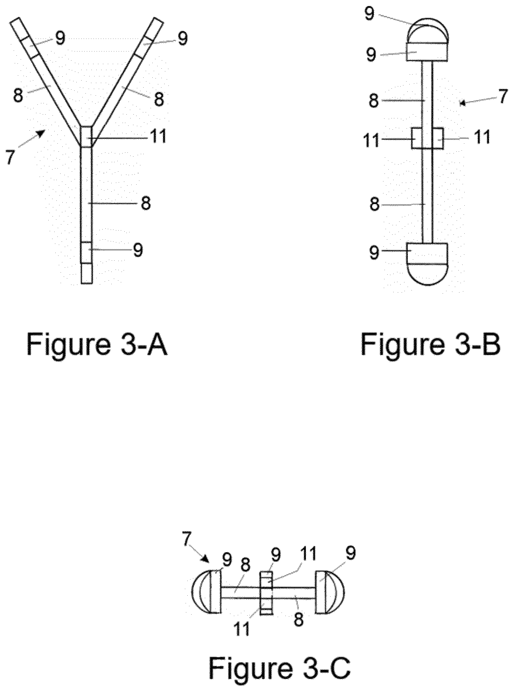

More specifically, considering Figures 2-A, 2-B, which show an example of the lower arm (8) of said vertical tricycles (7), and Figures 3-A, 3-B and 3-B, which show an example of the set of three arms (8), it can be seen how each of the arms (8) of said vertical tricycles (7) is made up of a tubular steel profile which is attached at one end, radially and integrally, without suspension, to an anchor (10) associated in turn with respective hooking mechanisms (11) that serve to fix the assembly to the front part and back part of the piston (5) of the locomotive head (3a) and, at the opposite end thereof, incorporates the bearing (9) with which it makes contact with the inner wall of the barrel (2).

According to the invention, the pneumatic seal (6) of the locomotive head (3a) is an adjustable pressure seal so that it does not rub against the inner wall of the barrel (2) once the train is in motion and the locomotive reaches the minimum displacement speed.

Considering Figures 7-A, 7-B and 7-C, it can be seen how, preferably, each of the accommodation wagons (3b) for passengers or goods that the vehicle (3) comprises is made up of a platform (12) with at least one consistent support wheel (13), so that similarly to the arms of vertical tricycles (7), on a vertical arm (8) that is integrally attached at an upper end to an anchor (10) associated in turn with a hooking mechanism (11) that serves to fix it to the platform (12) and, at its lower end, incorporates a bearing (9) on which it rests and makes contact with the wall of the barrel (2).

In a preferred embodiment, each platform (12) of each accommodation wagon (3b) incorporates a single support wheel (13) at the rear part thereof and in turn the platform (12) has such a width that there is a space (b) between it and the wall of the barrel (2) so that it does not rub against said wall.

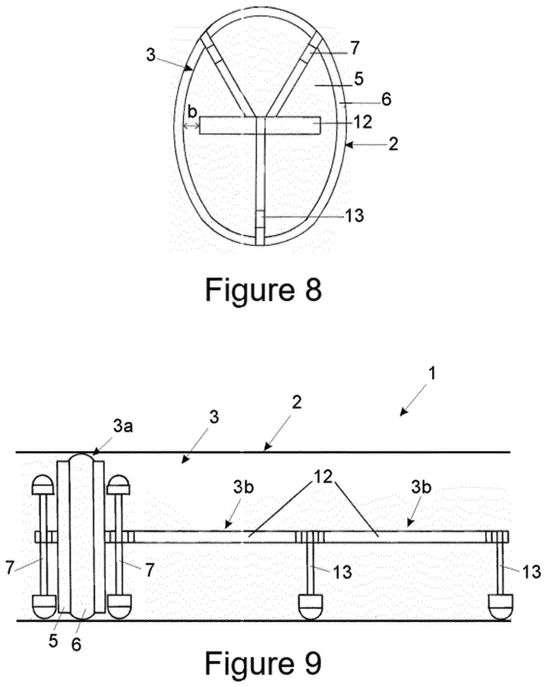

Figure 9 shows a schematic depiction of the vehicle (3) comprised in the means of transport (1) of the invention, in its horizontal displacement variant in the form of a train, where the assembly of the locomotive head (3a) and accommodation wagons (3b) for loading passengers and/or goods, together with a small portion of the barrel (2) through which said vehicle (3) is displaced, can be seen.

Optionally, the wall of the barrel (2) is made totally or partially of a transparent material.

Although it has not been shown in the figures, in a preferred embodiment, the barrel (2) describes a circuit in the form of an elongated rectangle with two straight round-trip barrel sections and round ends.

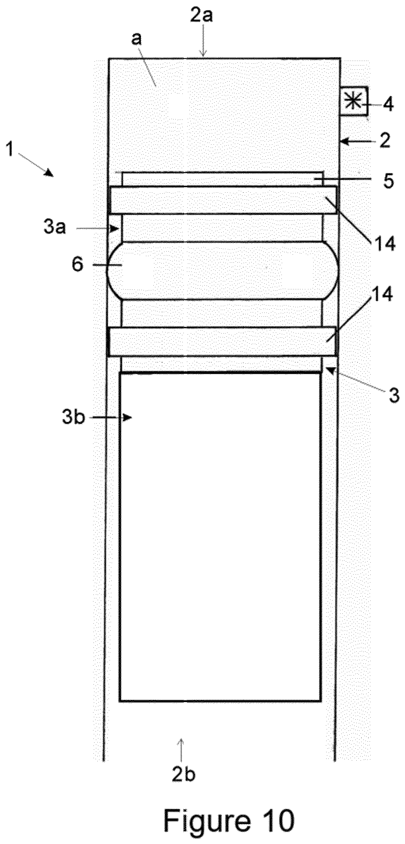

On the other hand, considering Figure 10, it can be seen how, in another variant of the invention, where the means of transport (1) are for vertical displacement, the barrel (2) is a vertically installed cylindrical tube that has a closed end (2a) at the upper part and an open end (2b) at the lower part and includes one or more exhaust fans (4), and the vehicle (3) is an elevator that has a head (3a) at the upper part, formed by a piston body (5) with a perimeter pneumatic seal (6), and a cabin (3b) for passengers or cargo at the lower part.

In addition, in this variant, the piston body (5) of the head (3a) includes two rigid seals (14), preferably metallic or ceramic, arranged around the perimeter of the piston body (5) on both sides of the pneumatic seal (6).

Finally, it should be noted that in this variant for vertical displacement, the pneumatic seal (6) of the head (3a) of the vehicle (3) is also a pressure seal.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. Means of transport with pneumatic piston operation for passengers comprising a hollow barrel (2) and a vehicle (3) that is displaced inside said barrel (2),
wherein said barrel (2) is cylindrical or oval in section and has hermetic walls, the barrel (2) also having a first closed end (2a) and a second open end (2b) to the outside, and said barrel (2) further incorporating, in at least part of an area close to the closed end (2a), one or more air exhaust fans (4) configured for creating a vacuum in a space (a) between said closed end (2a) and a head (3a) of the vehicle (3);
wherein said vehicle (3) comprises:
the head (3a), which is made up of a rigid body in the form of a piston (5) with a perimeter pneumatic seal (6) that fits with the shape and dimension of an inner wall of the barrel (2), and
at least one accommodation (3b) for loading passengers; and
wherein said vehicle (3) is installed inside the barrel (2) with the head (3a) oriented towards the closed end (2a) and the at least one accommodation (3b) towards the open end (2b), such that the vehicle (3) is displaced inside the barrel (2) in the direction of the closed end (2a), by activating the exhaust fans (4) and creating a vacuum in the space (a) between the head (3a) of the vehicle (3) and said closed end (2a) of the barrel (2), pushed by the existing pressure difference with the atmospheric pressure of the open end (2b),
**characterized in that** the pneumatic seal (6) of the locomotive head (3a) is an adjustable pressure seal configured for, once a minimum displacement speed of the vehicle (3) is achieved, removing pressure to prevent said pneumatic seal (6) from rubbing against the inner wall of the barrel, thereby allowing air to flow through a gap between said seal (6) and said inner wall of the barrel (2) acting as a "lubricant".

2. Means of transport with pneumatic piston operation for passengers according to claim 1, wherein the barrel (2) is installed horizontally and the vehicle (3) is a train with a locomotive head (3a) and one or more accommodation wagons (3b) for passengers.

3. Means of transport with pneumatic piston operation for passengers according to claim 2, wherein the barrel (2) is oval in section and the locomotive head (3a) includes, on both sides of the piston body (5), respective bearing structures or vertical tricycles (7), each of which comprises three arms (8) with bearings (9) at their ends that slide along the inner wall of the barrel (2), a lower vertical arm that acts as a support wheel and two V-shaped arms that act as anti-roll elements.

4. Means of transport with pneumatic piston operation for passengers according to claim 3, wherein each of the arms (8) of the vertical tricycles (7) is made up of a tubular steel profile that, at one end, is attached radially and integrally, without suspension, to an anchor (10) associated in turn with respective hooking mechanisms (11) that serve to fix the assembly to the front part and back part of the piston (5) of the locomotive head (3a) and, at the opposite end thereof, incorporates the bearing (9) with which it makes contact with the inner wall of the barrel (2).

5. Means of transport with pneumatic piston operation for passengers according to any of claims 2 to 4, wherein the accommodation wagons (3b) of the vehicle (3) are made up of a platform (12) with at least one support wheel (13) consisting of a vertical arm (8) that is integrally attached at an upper end to an anchor (10) associated in turn with a hooking mechanism (11) that serves to fix it to the platform (12) and, at its lower end, incorporates a bearing (9) on which it rests and makes contact with the wall of the barrel (2).

6. Means of transport with pneumatic piston operation for passengers according to claim 5, wherein each platform (12) of each accommodation wagon (3b) incorporates a single support wheel (13) at the rear part thereof.

7. Means of transport with pneumatic piston operation for passengers according to any of claims 2 to 6, wherein the wall of the barrel (2) is totally or partially made of transparent material.

8. Means of transport with pneumatic piston operation for passengers according to any of claims 2 to 7, wherein the barrel (2) describes a circuit in the form of an elongated rectangle with two straight round-trip barrel sections and round ends.

9. Means of transport with pneumatic piston operation for passengers according to claim 1, wherein the means of transport (1) is for vertical displacement, where the barrel (2) is a vertically installed cylindrical tube that has a closed end (2a) at the upper part and an open end (2b) at the lower part and includes one or more exhaust fans (4), and the vehicle (3) is an elevator that has a head (3a) at the upper part, made up of a piston body (5) with a perimeter pneumatic seal (6), and a cabin (3b) for passengers or cargo at the lower part.

10. Means of transport with pneumatic piston operation for passengers according to claim 9, wherein the piston body (5) of the head (3a) includes two rigid seals (14) arranged perimetrally on the piston body (5) on both sides of the pneumatic seal (6).

11. Means of transport with pneumatic piston operation for passengers according to claim 10, wherein the pneumatic seal (6) of the head (3a) of the vehicle (3) is an adjustable pressure seal configured for maneuvering and performing emergency braking when necessary.

12. Method for operating a means of transport according to any of the previous claims, **characterized by** comprising the step of, once a minimum displacement speed of the vehicle (3) is achieved, removing pressure to prevent said pneumatic seal (6) from rubbing against the inner wall of the barrel, thereby allowing air to flow through a gap between said seal (6) and said inner wall of the barrel (2) acting as a "lubricant".

13. Method for operating a means of transport according to claim 12 when dependent on any of claims 9-11, comprising the step of adjusting the pressure of the pneumatic seal (6) for maneuvering and performing emergency braking when necessary.

## Patentansprüche

1. Verkehrsmittel mit pneumatischem Kolbenbetrieb für Passagiere, umfassend ein hohles Rohr (2) und ein Fahrzeug (3), das innerhalb des Rohrs (2) verschoben wird,
wobei das Rohr (2) einen zylindrischen oder ovalen Querschnitt hat und hermetische Wände aufweist, wobei das Rohr (2) auch ein erstes geschlossenes Ende (2a) und ein zweites offenes Ende (2b) zur Außenseite hin aufweist, und wobei das Rohr (2) ferner in mindestens einem Teil eines Bereichs nahe dem geschlossenen Ende (2a) ein oder mehrere Luftabzugsgebläse (4) beinhaltet, die dazu konfiguriert sind, ein Vakuum in einem Raum (a) zwischen dem geschlossenen Ende (2a) und einem Kopf (3a) des Fahrzeugs (3) zu erzeugen;
wobei das Fahrzeug (3) Folgendes umfasst:
den Kopf (3a), der aus einem starren Körper in Form eines Kolbens (5) mit einer pneumatischen Umfangsdichtung (6) besteht, die an die Form und die Abmessungen einer Innenwand des Rohrs (2) angepasst ist, und
mindestens eine Unterkunft (3b) zum Laden von Passagieren; und
wobei das Fahrzeug (3) innerhalb des Rohres (2) mit dem Kopf (3a) in Richtung des geschlossenen Endes (2a) und der mindestens einen Unterkunft (3b) in Richtung des offenen Endes (2b) installiert ist, sodass das Fahrzeug (3) innerhalb des Rohres (2) in Richtung des geschlossenen Endes (2a) verschoben wird, durch Aktivieren der Abzugsgebläse (4) und Erzeugen eines Vakuums in dem Raum (a) zwischen dem Kopf (3a) des Fahrzeugs (3) und dem geschlossenen Ende (2a) des Rohrs (2), das durch den bestehenden Druckunterschied zum Luftdruck des offenen Endes (2b) entsteht,
**dadurch gekennzeichnet, dass** die pneumatische Dichtung (6) des Lokomotivkopfes (3a) eine einstellbare Druckdichtung ist, die dazu konfiguriert ist, bei Erreichen einer Mindestverschiebungsgeschwindigkeit des Fahrzeugs (3) den Druck abzubauen, um zu verhindern, dass die pneumatische Dichtung (6) an der Innenwand des Rohrs reibt, wodurch Luft durch einen Spalt zwischen der Dichtung (6) und der Innenwand des Rohrs (2) strömen kann, die als "Schmiermittel" wirkt.

2. Verkehrsmittel mit pneumatischem Kolbenbetrieb für Passagiere nach Anspruch 1, wobei das Rohr (2) horizontal installiert ist und das Fahrzeug (3) ein Zug mit einem Lokomotivkopf (3a) und einem oder mehreren Unterkunftswagen (3b) für Passagiere ist.

3. Verkehrsmittel mit pneumatischem Kolbenbetrieb für Passagiere nach Anspruch 2, wobei das Rohr (2) einen ovalen Querschnitt hat und der Lokomotivkopf (3a) auf beiden Seiten des Kolbenkörpers (5) jeweilige Lagerstrukturen oder Vertikaldreiräder (7) enthält, die jeweils drei Arme (8) mit Lagern (9) an ihren Enden, die entlang der Innenwand des Rohrs (2) gleiten, einen unteren vertikalen Arm, der als Trägerrad wirkt, und zwei V-förmige Arme, die als Anti-Roll-Elemente wirken, umfassen.

4. Verkehrsmittel mit pneumatischem Kolbenbetrieb für Passagiere nach Anspruch 3, wobei jeder der Arme (8) der Vertikaldreiräder (7) aus einem röhrenförmigen Stahlprofil besteht, das an einem Ende radial und einstückig, ohne Aufhängung, an einem Anker (10) befestigt ist, der seinerseits mit jeweiligen Einhakmechanismen (11) verknüpft ist, die dazu dienen, die Baugruppe am vorderen Teil und am hinteren Teil des Kolbens (5) des Lokomotivkopfes (3a) zu befestigen, und das am gegenüberliegenden Ende das Lager (9) beinhaltet, mit dem es Kontakt mit der Innenwand des Rohrs (2) herstellt.

5. Verkehrsmittel mit pneumatischem Kolbenbetrieb für Passagiere nach einem der Ansprüche 2 bis 4, wobei die Unterkunftswagen (3b) des Fahrzeugs (3) aus einer Plattform (12) mit mindestens einem Trägerrad (13) bestehen, der aus einem vertikalen Arm (8) aufgebaut ist, der an einem oberen Ende einstückig an einem Anker (10) befestigt ist, der wiederum mit einem Einhakmechanismus (11) verknüpft ist, der zu seiner Befestigung an der Plattform (12) dient, und an seinem unteren Ende ein Lager (9) beinhaltet, auf dem er aufliegt und mit der Wand des Rohrs (2) Kontakt herstellt.

6. Verkehrsmittel mit pneumatischem Kolbenbetrieb für Passagiere nach Anspruch 5, wobei jede Plattform (12) jedes Unterkunftswagens (3b) ein einziges Trägerrad (13) an seinem hinteren Teil beinhaltet.

7. Verkehrsmittel mit pneumatischem Kolbenbetrieb für Passagiere nach einem der Ansprüche 2 bis 6, wobei die Wand des Rohres (2) ganz oder teilweise aus transparentem Material besteht.

8. Verkehrsmittel mit pneumatischem Kolbenbetrieb für Passagiere nach einem der Ansprüche 2 bis 7, wobei das Rohr (2) einen Kreislauf in Form eines langgestreckten Rechtecks mit zwei geraden rundlaufenden Rohrabschnitten und runden Enden beschreibt.

9. Verkehrsmittel mit pneumatischem Kolbenbetrieb für Passagiere nach Anspruch 1, wobei das Verkehrsmittel (1) zur vertikalen Verschiebung dient, wobei das Rohr (2) eine vertikal installierte zylindrische Röhre ist, die ein geschlossenes Ende (2a) am oberen Teil und ein offenes Ende (2b) am unteren Teil aufweist und ein oder mehrere Abzugsgebläse (4) enthält, und das Fahrzeug (3) ein Aufzug ist, der am oberen Teil einen Kopf (3a), der aus einem Kolbenkörper (5) mit einer pneumatischen Umfangsdichtung (6) besteht, und am unteren Teil eine Kabine (3b) für Passagiere oder Fracht aufweist.

10. Verkehrsmittel mit pneumatischem Kolbenbetrieb für Passagiere nach Anspruch 9, wobei der Kolbenkörper (5) des Kopfes (3a) zwei starre Dichtungen (14) enthält, die beidseitig der pneumatischen Dichtung (6) umlaufend am Kolbenkörper (5) angeordnet sind.

11. Verkehrsmittel mit pneumatischem Kolbenbetrieb für Passagiere nach Anspruch 10, wobei die pneumatische Dichtung (6) des Kopfes (3a) des Fahrzeugs (3) eine einstellbare Druckdichtung ist, die dazu konfiguriert ist, bei Bedarf zu manövrieren und eine Notbremsung durchzuführen.

12. Verfahren zum Betreiben eines Verkehrsmittels nach einem der vorhergehenden Ansprüche, **dadurch gekennzeichnet, dass** es den Schritt umfasst, dass bei Erreichen einer Mindestverschiebungsgeschwindigkeit des Fahrzeugs (3) der Druck abgebaut wird, um zu verhindern, dass die pneumatische Dichtung (6) an der Innenwand des Rohrs reibt, wodurch Luft durch einen Spalt zwischen der Dichtung (6) und der Innenwand des Rohrs (2) strömen kann, die als "Schmiermittel" wirkt.

13. Verfahren zum Betreiben eines Verkehrsmittels nach Anspruch 12, wenn es von einem der Ansprüche 9-11 abhängt, umfassend bei Bedarf den Schritt des Einstellens des Drucks der pneumatischen Dichtung (6) zum Manövrieren und Durchführen einer Notbremsung.

## Revendications

1. Moyen de transport opérant en piston pneumatique pour passagers comprenant un fût creux (2) et un véhicule (3) qui est déplacé à l'intérieur dudit fût (2),
dans lequel ledit fût (2) est de section cylindrique ou ovale et a des parois hermétiques, le fût (2) ayant également une première extrémité fermée (2a) et une seconde extrémité ouverte (2b) vers l'extérieur, et ledit fût (2) incorporant en outre, dans au moins une partie d'une zone proche de l'extrémité fermée (2a), un ou plusieurs ventilateurs d'échappement d'air (4) conçus pour créer un vide dans un espace (a) entre ladite extrémité fermée (2a) et une tête (3a) du véhicule (3) ;
dans lequel ledit véhicule (3) comprend :
la tête (3a), qui est constituée d'un corps rigide sous la forme d'un piston (5) avec un joint pneumatique périphérique (6) qui s'adapte à la forme et aux dimensions d'une paroi interne du fût (2), et
au moins un logement (3b) pour l'embarquement de passagers ; et
dans lequel ledit véhicule (3) est installé à l'intérieur du fût (2) avec la tête (3a) orientée vers l'extrémité fermée (2a) et l'au moins un logement (3b) vers l'extrémité ouverte (2b), de telle sorte que le véhicule (3) est déplacé à l'intérieur du fût (2) dans la direction de l'extrémité fermée (2a), par l'activation des ventilateurs d'échappement (4) et la création d'un vide dans l'espace (a) entre la tête (3a) du véhicule (3) et ladite extrémité fermée (2a) du fût (2), poussé par la différence de pression existante avec la pression atmosphérique de l'extrémité ouverte (2b),
**caractérisé en ce que** le joint pneumatique (6) de la tête de locomotive (3a) est un joint à pression réglable conçu pour, une fois qu'une vitesse de déplacement minimale du véhicule (3) est atteinte, éliminer la pression pour empêcher ledit joint pneumatique (6) de frotter contre la paroi interne du fût, permettant ainsi à l'air de circuler à travers un espace entre ledit joint (6) et ladite paroi interne du fût (2) faisant office de « lubrifiant ».

2. Moyen de transport opérant en piston pneumatique pour passagers selon la revendication 1, dans lequel le fût (2) est installé horizontalement et le véhicule (3) est un train avec une tête de locomotive (3a) et un ou plusieurs wagons de logement (3b) pour passagers.

3. Moyen de transport opérant en piston pneumatique pour passagers selon la revendication 2, dans lequel le fût (2) est de section ovale et la tête de locomotive (3a) comporte, de part et d'autre du corps de piston (5), des structures de palier respectives ou des tricycles verticaux (7), chacun d'eux comprend trois bras (8) avec des paliers (9) au niveau de leurs extrémités qui coulissent le long de la paroi interne du fût (2), un bras vertical inférieur qui fait office de roue de support et deux bras en forme de V qui font office d'éléments antiroulis.

4. Moyen de transport opérant en piston pneumatique pour passagers selon la revendication 3, dans lequel chacun des bras (8) des tricycles verticaux (7) est constitué d'un profilé tubulaire en acier qui, au niveau d'une extrémité, est relié radialement et de façon monobloc, sans suspension, à un ancrage (10) associé à son tour à des mécanismes d'accrochage (11) respectifs qui servent à fixer l'ensemble à la partie avant et à la partie arrière du piston (5) de la tête de locomotive (3a) et, au niveau de son extrémité opposée, incorpore le palier (9) avec lequel il entre en contact avec la paroi interne du fût (2).

5. Moyen de transport opérant en piston pneumatique pour passagers selon l'une quelconque des revendications 2 à 4, dans lequel les wagons de logement (3b) du véhicule (3) sont constitués d'une plate-forme (12) avec au moins une roue de support (13) composée d'un bras vertical (8) qui est relié de façon monobloc au niveau d'une extrémité supérieure à un ancrage (10) associé à son tour à un mécanisme d'accrochage (11) qui sert à le fixer à la plate-forme (12) et, au niveau de son extrémité inférieure, incorpore un palier (9) sur lequel il repose et entre en contact avec la paroi du fût (2).

6. Moyen de transport opérant en piston pneumatique pour passagers selon la revendication 5, dans lequel chaque plate-forme (12) de chaque wagon de logement (3b) incorpore une seule roue de support (13) au niveau de la partie arrière de celle-ci.

7. Moyen de transport opérant en piston pneumatique pour passagers selon l'une quelconque des revendications 2 à 6, dans lequel la paroi du fût (2) est totalement ou partiellement constituée de matériau transparent.

8. Moyen de transport opérant en piston pneumatique pour passagers selon l'une quelconque des revendications 2 à 7, dans lequel le fût (2) décrit un circuit sous la forme d'un rectangle allongé avec deux sections de fût droites à système bidirectionnel et des extrémités rondes.

9. Moyen de transport opérant en piston pneumatique pour passagers selon la revendication 1, dans lequel le moyen de transport (1) est destiné à un déplacement vertical, où le fût (2) est un tube cylindrique installé verticalement qui a une extrémité fermée (2a) au niveau de la partie supérieure et une extrémité ouverte (2b) au niveau de la partie inférieure et comporte un ou plusieurs ventilateurs d'échappement (4), et le véhicule (3) est un ascenseur qui a une tête (3a) au niveau de la partie supérieure, constituée d'un corps de piston (5) avec un joint pneumatique périphérique (6), et une cabine (3b) pour passagers ou marchandises au niveau de la partie inférieure.

10. Moyen de transport opérant en piston pneumatique pour passagers selon la revendication 9, dans lequel le corps de piston (5) de la tête (3a) comporte deux joints rigides (14) agencés de façon périmétrique sur le corps de piston (5) de part et d'autre du joint pneumatique (6).

11. Moyen de transport opérant en piston pneumatique pour passagers selon la revendication 10, dans lequel le joint pneumatique (6) de la tête (3a) du véhicule (3) est un joint à pression réglable conçu pour manœuvrer et exécuter un freinage d'urgence si nécessaire.

12. Procédé d'opération d'un moyen de transport selon l'une quelconque des revendications précédentes, **caractérisé en ce qu'il** comprend l'étape consistant à, une fois qu'une vitesse de déplacement minimale du véhicule (3) est atteinte, éliminer la pression pour empêcher ledit joint pneumatique (6) de frotter contre la paroi interne du fût, permettant ainsi à l'air de circuler à travers un espace entre ledit joint (6) et ladite paroi interne du fût (2) faisant office de « lubrifiant ».

13. Procédé d'opération d'un moyen de transport selon la revendication 12 lorsqu'elle dépend de l'une quelconque des revendications 9 à 11, comprenant l'étape consistant à régler la pression du joint pneumatique (6) pour la manoeuvre et l'exécution du freinage d'urgence si nécessaire.
